# EUROPEAN PATENT APPLICATION

(11) **EP 3 301 698 A2**
(43) Date of publication of application: **04.04.2018**
(21) Application number: 17306296.9
(22) Date of filing: 29.09.2017
(51) Int. Cl.: H01H 31/10

(54) **MECHANICAL INTERLOCK, DUAL POWER SUPPLY SWITCHING DEVICE, AND METHOD FOR OPERATING THE SAME**

(30) Priority: 30.09.2016 CN 201610875113
(71) Applicant: Schneider Electric Industries SAS, 92500 Rueil-Malmaison (FR)
(72) Inventor: ZHOU, Bin, Shanghai 201203 (CN); LIU, Zhenzhong, Shanghai 201203 (CN); ZENG, Xiaojing, Shanghai 201203 (CN); ABADIE, Michel, Shanghai 201203 (CN); MAO, Shunxian, Shanghai 201203 (CN)
(74) Representative: Manitz Finsterwald Patentanwälte PartmbB

(57) **Abstract**

Embodiments of the disclosure provide a mechanical interlock, a dual power supply switching device, and a method for operating the dual power supply switching device. The mechanical interlock comprises: a first interlock lever coupled with a crank of a spindle of one power supply switch of the dual power supply switching device; a second interlock lever pivotally connected with the first interlock lever and also pivotally connected with a base of the dual power supply switching device, the second interlock lever being configured to rotate in a second direction opposite to the first direction in response to the movement of the first interlock lever; wherein a trip lever of the other power supply switch of the dual power supply switching device is configured to be in a rotation path of the second interlock lever and is configured to be abutted by the second interlock lever in the rotation path of the second interlock lever so as to keep the tripped state of the other power supply switch. The mechanical interlock, the dual power supply switching device and the method of operating the dual power supply switching device according to the disclosure can provide safe and reliable interlocking, and prevent safety accidents such as short circuit between power supplies or the like.

## Description

### FIELD OF THE INVENTION

Embodiments of the disclosure relate to a technical field of a dual power supply switching device, and in particular to a mechanical interlock for a dual power supply switching device, a dual power supply switching device, and a method for operating the dual power supply switching device.

### BACKGROUND OF THE INVENTION

A dual power supply switching device is used for continuously supplying electrical power. As people's requirements on the continuity, security and reliability of electrical power become more intensive and wider, the application of dual power supply switching device is becoming wider. For example, at important public places such as hotel and theater where people are populated, power interruption will lead to disorder, and may even causes life threat to the people. Relevant industry standards regulates that a power distribution system thereof must have an emergency power supply. In order to switch different power supplies without interruption, when one power supply is turned on, the other power supply should be prevented from being switched on from an off state; in an intermediate position where both switches are opened, a situation should also be avoided in which a misoperation causes simultaneous closing of the two power supplies so that the two power supplies are turned on simultaneously. In this way, a short circuit between the power supplies can be avoided, thus preventing the occurrence of major safety accidents. Mechanical interlocks in the prior art are mainly realized by an interlock between a opening trip lever of a switch of a normal/emergency power supply switch and a spindle of the switch of the emergency/normal power supply. Such a structure is relatively complicated, and will often result in a situation in which the two power supplies are closed simultaneously due to misoperation, thus posing a severe potential safety risk. Therefore, it is desired to have an improvement to the mechanical interlocks in the prior art so as to improve the reliability and safety of mechanical interlocks.

### SUMMARY OF THE INVENTION

In view of the above, one of the objects of the embodiments of the disclosure is to provide a mechanical interlock for dual power supply switching device, a dual power supply switching device, and a method of operating the dual power supply switching device, which can at least address one or more technical problems existing in the above prior art.

According to an aspect of the disclosure, a mechanical interlock is provided for dual power supply switching device and configured to prevent the dual power supply switching device from being closed simultaneously, comprising: a first interlock lever coupled with a crank of a spindle of one power supply switch of the dual power supply switching device and configured to move in response to the closing of said one power supply switch, wherein when said one power supply switch is closed, the spindle of said one power supply switch is rotated in a first direction; a second interlock lever pivotally connected with the first interlock lever and also pivotally connected with a base of the dual power supply switching device, the second interlock lever being configured to rotate in a second direction opposite to the first direction in response to the movement of the first interlock lever; wherein a trip lever of another power supply switch of the dual power supply switching device is configured to be in a rotation path of the second interlock lever and is configured to be abutted by the second interlock lever in the rotation path of the second interlock lever so as to keep the tripped state of the other power supply switch.

According to an embodiment of the disclosure, the first interlock lever is provided with a slide groove so that the first interlock lever is coupled with the spindle of said one power supply switch in a way of sliding relative to each other.

According to an embodiment of the disclosure, a biasing member is disposed between a crank of the spindle of said one power supply switch and the first interlock lever, and is configured to apply a force to the first interlock lever in response to the closing of said one power supply switch so as to accelerate the movement of the second interlock lever.

According to an embodiment of the disclosure, the spindle of said one power supply switch is provided with a damping member for weakening kinetic energy of the spindle of said one power supply switch during closing.

According to an embodiment of the disclosure, the damping member is a spring, an end of which is disposed on the spindle of said one power supply switch, another end of which is disposed on a housing of the dual power supply switching device, and the spring is configured to apply a resistant force to the spindle of said one power supply switch at least at an early stage of the closing movement of said one power supply switch.

According to an embodiment of the disclosure, the mechanical interlock further comprises a blocking assembly which moves in association with the closing movement of said one power supply switch and which is configured such that when the other power supply switch is normally closed, the blocking assembly is located outside the closing path of the other power supply switch, and when said one power supply switch and the other power supply switch are closed simultaneously, at least one part of the blocking assembly moves to the closing path of the other power supply switch in association with the closing movement of said one power supply switch, and blocks the closing movement of the other power supply switch.

According to an embodiment of the disclosure, the blocking assembly comprises a blocking link, an end of which is pivotally connected to the housing of the dual power supply switching device, another end of which is coupled with the second interlock lever in a way of sliding relative to each other, the blocking link being configured to rotate when driven by the second interlock lever during the closing of said one power supply switch so as to abut the crank of the spindle of the other power supply switch.

According to an embodiment of the disclosure, the blocking link comprises a protrusion which protrudes towards the spindle of the other power supply switch from the blocking link.

According to a second aspect of the invention, a dual power supply switching device is provided, comprising: one power supply switch; another power supply switch; and mechanical interlocks as described above arranged on both sides of the dual power supply switching device in a centrally symmetrical manner.

According to a third aspect of the invention, a method for operating a dual power supply switching device is provided, wherein the dual power supply switching device comprises one power supply switch, another power supply switch and mechanical interlocks arranged on both sides of the dual power supply switching device in a centrally symmetrical manner, and the method comprises: in response to the closing of one power supply switch, rotating a spindle of the one power supply switch in a first direction so as to drive a first interlock lever of the mechanical interlock in movement; in response to the movement of the first interlock lever, rotating a second interlock lever of the mechanical interlock in a second direction opposite to the first direction; and configuring a trip lever of the other power supply switch of the dual power supply switching device in a rotation path of the second interlock lever, and in the rotation path of the second interlock lever, causing the trip lever of the other power supply switch to abut the second interlock lever so as to keep the tripped state of the other power supply switch.

According to an embodiment of the disclosure, the method further comprises causing the first interlock lever and the spindle of said one power supply switch to slide relative to each other during the closing of said one power supply switch.

According to an embodiment of the disclosure, the method further comprises applying a force to the first interlock lever in response to the closing of said one power supply switch so as to accelerate the movement of the second interlock lever.

According to an embodiment of the disclosure, the method further comprises weakening kinetic energy of the spindle of said one power supply switch during the closing of said one power supply switch.

According to an embodiment of the disclosure, the method further comprises applying a resistant force to the spindle of said one power supply switch at least at an early stage of the closing movement of said one power supply switch.

According to an embodiment of the disclosure, the method further comprises causing a blocking assembly not to hinder the closing path of the other power supply switch when the other power supply switch is normally closed, and causing the blocking assembly to move to the closing path of the other power supply switch in association with the closing movement of said one power supply switch and block the closing movement of the other power supply switch, when said one power supply switch and the other power supply switch are closed simultaneously.

According to an embodiment of the disclosure, the method further comprises causing a blocking link of the blocking assembly to rotate when driven by the second interlock lever so as to abut a crank of the spindle of the other power supply switch, during the closing of said one power supply switch, and causing the blocking link and the second interlock lever to slide relative to each other when the second interlock lever drives the blocking link to move.

According to an embodiment of the disclosure, the method further comprises using a protrusion, which protrudes towards the spindle of the other power supply switch from the blocking link, to block the closing of the other power supply switch during the closing of said one power supply switch.

The mechanical interlock, the dual power supply switching device and the method of operating the dual power supply switching device according to the disclosure can provide safe and reliable interlocking, and prevent safety accidents such as short circuit between power supplies or the like.

### BRIEF DESCRIPTION OF THE ACCOMPANYING DRAWINGS

The embodiments of the disclosure will now be described with reference to the accompanying drawings, by way of example only, wherein
Fig. 1 is schematic top view of main parts of the dual power supply switching device according to an embodiment of the disclosure;
Fig. 2 is a view from the right side of Fig. 1, and mainly illustrates a schematic structure diagram of the mechanical interlock according to an embodiment of the disclosure, wherein two power supply switches both are in an open state;
Fig. 3, similar to Fig. 2, illustrates a structure diagram of the mechanical interlock according to an embodiment of the disclosure, wherein the power supply switch on the left side is closed, and the power supply switch on the left side is opened;
Fig. 4 illustrates a schematic structure diagram of the mechanical interlock according to another embodiment of the disclosure, wherein the power supply switches both are in an open state; and
Fig. 5, similar to Fig. 2, illustrates a schematic structure diagram of the mechanical interlock according to another embodiment of the disclosure, wherein the power supply switches both are simultaneously closed.

### DETAILED DESCRIPTION OF THE PREFERRED EMBODIMENTS

The embodiments of the disclosure will now be described specifically with reference to the accompanying drawings. It should be noted that in the drawings, similar components or functional assemblies may be denoted by identical numbers. The drawings are merely intended to illustrate the embodiments of the disclosure. Alternative technical solutions can be obtained by those skilled in the art from the following description without departing from the spirit and scope of protection of the disclosure.

The mechanical interlock and the dual power supply switching device according to the embodiments of the disclosure will be described below with reference to the drawings. It should be noted that the structures of the mechanical interlock and the dual power supply switching device in the drawings are merely schematic, and the specific embodiments of the mechanical interlock and the dual power supply switching device can take various forms.

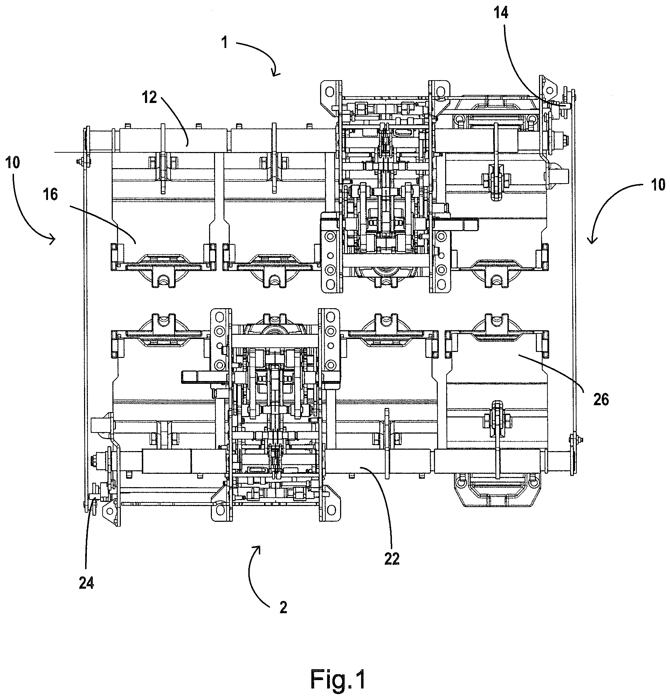

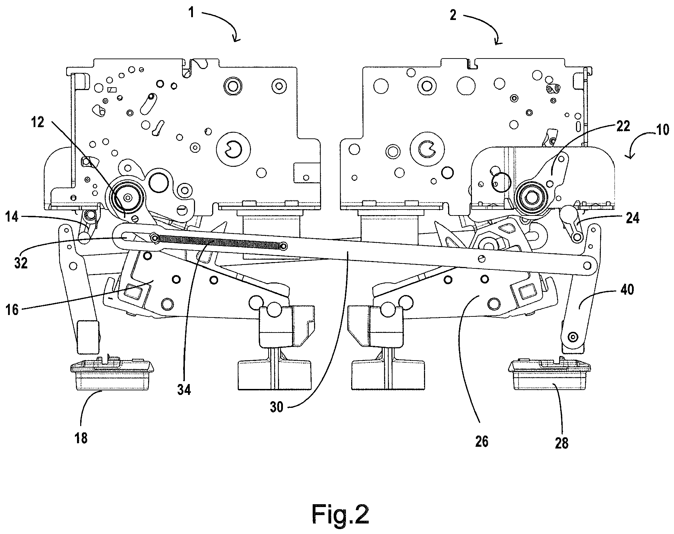

As shown in Fig. 1, the dual power supply switching device comprises: one power supply switch 1; another power supply switch 2; and two mechanical interlocks 10 arranged on both sides of the dual power supply switching device in a centrally symmetrical manner. Fig. 2 illustrates details of the structure of the mechanical interlock 10 according to an embodiment of the disclosure.

As shown in Fig. 2, the mechanical interlock 10 comprises: a first interlock lever 30 that is coupled with a crank of a spindle 12 of the one power supply switch 1 of the dual power supply switching device and is configured to move in response to the closing of said one power supply switch 1, wherein when said one power supply switch 1 is closed, the spindle 12 of said one power supply switch 1 is rotated in a first direction; a second interlock lever 40 that is pivotally connected with the first interlock lever 30, is also pivotally connected with a base of the dual power supply switching device, and is configured to rotate in a second direction opposite to the first direction in response to the movement of the first interlock lever 30; wherein a trip lever 24 of the other power supply switch 2 of the dual power supply switching device is configured to be in a rotation path of the second interlock lever 40 and is configured to be abutted (or contacted) by the second interlock lever 40 in the rotation path of the second interlock lever 40 so as to keep the other power supply switch 2 at a tripped (or opened) state.

Using the mechanical interlocks installed on both sides of the switching devices in a centrally symmetrical manner (or a diagonally symmetrical manner) according to the embodiment of the disclosure, the spindle of one power supply switch serves as an active lever which moves in association with the mechanical interlock; the mechanical interlock, as a follower device, acts upon a mechanical trip lever of the other power supply switch so as to maintain the tripped state of the other power supply switch, thus reliably avoiding a simultaneous closing of the two power supplies; even if in a situation of misoperation, simultaneous closing of the two power supplies can be avoided.

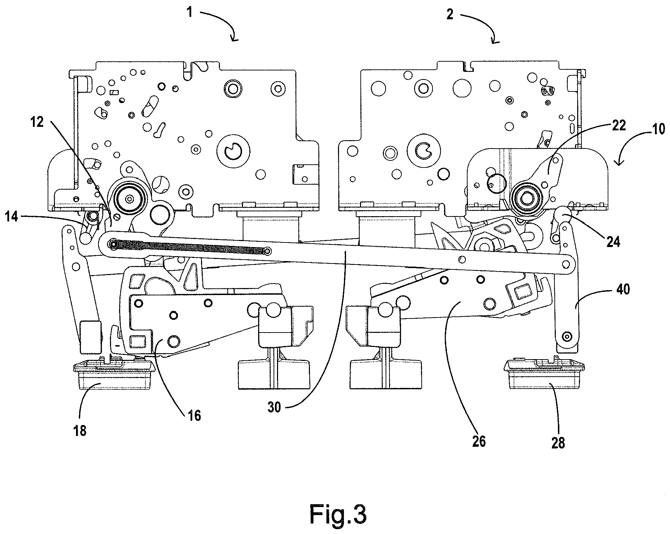

A functional principle of how simultaneous closing is prevented by the mechanical interlock according to the embodiment of the disclosure will be described below with reference to Figs. 2 and 3 as well as operation processes of the dual power supply switching device.

In a state of normal operation of the dual power supply switching device, it is required to ensure that one power supply switch maintains a closed state, and no matter whatever action the other power supply switch applies, it is required to ensure that the other power supply switch cannot be closed. In a state where the dual power supply switching device have not yet started to operate, i.e., when both the power supplies are initially in an open state, it is required to ensure that even if the user attempts to close both the power supplies by misoperation, both the power supplies cannot be switched on simultaneously.

As shown in Figs. 2 and 3, a crank is fixedly connected with the spindle 12 of said one power supply switch 1, an end of the first interlock lever 30 is hinged to the crank or forms a sliding pair with the crank, the first interlock lever 30 is hinged to the second interlock lever 40, and the first interlock lever 30 is also hinged to a base (which is a fixed element). The first interlock lever 30 moves as the crank rotates, thus driving the second interlock lever 40 to swing around a shaft hinged to the base. When said one power supply switch 1 is closed, the spindle 12 thereof is rotated to a certain degree, and the crank drives the first interlock lever 30 to move so that the second interlock lever 40 swings to touch a mechanical trip lever 24 of the other power supply switch 2, and maintains it at the tripped position. At this point, if there is any misoperation that causes the other power supply switch be closed, this command cannot be executed since the mechanical interlock is in a tripped position, thus avoiding short circuit between the two power supplies.

According to the mechanical interlock of the disclosure, even if the user attempts to close the two power supplies, the two power supplies cannot be switched on simultaneously. As shown in Figs. 2 and 3, even if the dual power supply switching device simultaneously, since the mechanical interlocks installed in a diagonally symmetrical manner function simultaneously, the spindles of the two power supply switches will trip the respective mechanism of the other power supply respectively when the spindles rotate towards the closed position, such that both movable contacts 16, 26 of the two power supply switches cannot contact respective stationary contacts 18, 28. Therefore, both the two switches cannot be closed and switched on.

According to an embodiment of the disclosure, the first interlock lever 30 is provided with a slide groove 32 so that the first interlock lever 30 is coupled with the spindle 12 of said one power supply switch 1 in a way of sliding relative to each other. In this situation, the sliding pair can be used to alleviate the difficulty in designing the positions of the spindles, the crank, the first and second interlock levers as well as the travel stroke of the trip lever, thus effectively avoiding interference between elements. In another embodiment, a hinged connection can be also used between the crank and the first interlock lever according to the rotation angles of the spindles, the length of the crank, the positions of the first and second interlock levers and the travel of the trip lever.

According to an embodiment of the disclosure, a biasing member 34 is disposed between a crank of the spindle 12 of said one power supply switch 1 and the first interlock lever 30, and is configured to bias the first interlock lever 30 in response to the closing of said one power supply switch 1 so as to accelerate the movement of the second interlock lever 40. Using such a solution, action of the second interlock lever 40 can be triggered at a timing as early as possible so as to push the trip lever 24 to rotate and trip as early as possible. In the illustrated embodiment, the biasing member is for example a spring, an end of which is disposed on the crank, and the other end of which is disposed on the first interlock lever 30. A pre-tensioning force is applied to the spring. When said one power supply switch 1 is not closed, under the action of the spring, the crank contacts a side of the slide groove (which is an oblong hole in the illustrated example) that has a shorter length. In an embodiment, the pre-tensioning force is preferably larger than a tripping force for tripping the other mechanism of the other power supply switch. In this situation, the tripping of the other power supply switch can be triggered more quickly.

In addition to the above two situations, there is also another concern. Since a torque for driving the spindles to rotate is typically very large when the two power supply switches are closed, there is still a possibility that the two power supply switches will be closed simultaneously and instantaneously under the impact of an enormous energy of the large torque when the user performs a closing operation on the two power supply switches simultaneously due to misoperation, and even an instantaneous closing will pose a major hidden safety risk.

In view of this, the inventor of the application has conducted detailed simulation analysis on the force components for closing and opening, and has found that by providing a damping member so as to consume the closing energy at an early stage of closing, the energy accumulated for driving the spindles is optimally smaller than zero before the movable and stationary contacts contact each other; that is, a movement in the opening direction is satisfied, and it is ensured that a short circuit between the two power supplies will not occur, thus protecting the safety of lines.

According to an embodiment of the disclosure, the damping member is a spring, an end of which is disposed on the spindle of said one power supply switch, another end of which is disposed on a housing of the dual power supply switching device, and which is configured to apply a resistant force to the spindle of said one power supply switch at least at an early stage of the closing movement of said one power supply switch. By providing the spring and configuring it to exhibit a resistant force when the power supply switch is closed, the accumulated energy is smaller than zero before the movable and stationary contacts contact each other; that is, a movement in the opening direction is satisfied, and it is ensured that a short circuit between the two power supplies will not occur, thus protecting the safety of lines.

In order to deal with the concern that the two power supply switches will be closed instantaneously when closing operations on the two power supply switches are performed simultaneously by the user due to misoperation, the inventor of the application also proposes another improvement solution.

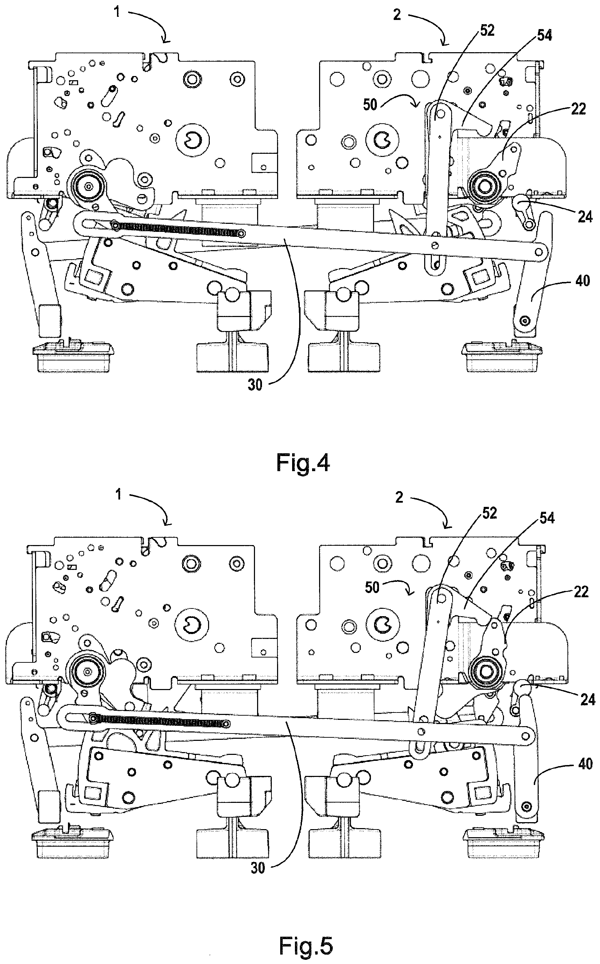

As shown in Figs. 4 and 5, the mechanical interlock 10 further comprises a blocking assembly 50 which moves in association with the closing movement of said one power supply switch 1 and which is configured such that when the other power supply switch 2 is normally closed, the blocking assembly 50 is located outside the closing path of the other power supply switch 2, and when said one power supply switch 1 and the other power supply switch 2 are closed simultaneously, at least one part of the blocking assembly 50 moves to the closing path of the other power supply switch 2 in association with the closing movement of said one power supply switch 1, and blocks the closing movement of the other power supply switch 2.

According to an embodiment of the disclosure, the blocking assembly 50 comprises a blocking link 52, an end of which is pivotally connected to the housing of the dual power supply switching device, another end of which is coupled with the second interlock lever 40 in a way of sliding relative to each other, and which is configured to rotate when driven by the second interlock lever 40 during the closing of said one power supply switch 1 so as to abut the crank of the spindle 22 of the other power supply switch 2, thus in turn blocking the closing of the other power supply switch 2.

According to an embodiment of the disclosure, the blocking link 52 comprises a protrusion 54 which protrudes towards the spindle 22 of the other power supply switch 2 from the blocking link 52.

As shown, in an embodiment, the blocking link 52 and the protrusion 54 are the same member or integral member. The blocking link 52 is pivotally connected to the housing of the dual power supply switching device, and is also slidingly coupled with the second interlock lever 40. In case of a misoperation during which simultaneously closing is performed by the user, when said one power supply switch 1 is closed, the blocking link 52 and the protrusion 54 will rotate together (clockwise in the drawing) due to being driven by the second interlock lever 40 so that they will come closer to the crank of the spindle 22 of the other power supply switch 2. When the trip lever 24 is pushed by the second interlock lever 40 until it reaches the limit position, the elastic member will begin to be stretched. At the same time as the spindle 22 continues to rotate, the other power supply switch 2 is closed, the spindle 22 drives the crank to rotate (counterclockwise), and the protrusion 54 stops moving due to the blocking link 52. When the spindle 22 continues to move in the closing direction (counterclockwise) until the crank 22 is blocked by the protrusion 54, the spindles 12, 22 will continue to rotate in the opening direction under the action of opening spring after a small impact, thus ensuring a short circuit between the two power supplies will not occur, thus protecting the safety of lines.

According to an embodiment of the disclosure, a method of operating dual power supply switching device is also provided. Like the mechanical interlock and the dual power supply switching device of the embodiments of the disclosure, the method of the application can also provide safe and reliable interlocking, and prevent safety accidents such as short circuit between power supplies or the like.

Through the teachings provided herein in the above description and relevant drawings, many modifications and other embodiments of the disclosure given herein will be appreciated by those skilled in the art to which the disclosure pertains. Therefore, it is understood that the embodiments of the disclosure are not limited to the specific embodiments of the disclosure, and the modifications and other embodiments are intended to fall within the scope of the disclosure. In addition, while exemplary embodiments have been described in the above description and relevant drawings in the context of some illustrative combinations of components and/or functions, it should be realized that different combinations of components and/or functions can be provided in alternative embodiments without departing from the scope of the disclosure. In this regard, for example, it is anticipated that other combinations of components and/or functions that are different from the above definitely described will also fall within the scope of the disclosure. While specific terms are used herein, they are only used in a general and descriptive sense rather than limiting.

## Claims

1. A mechanical interlock (10) for a dual power supply switching device, being **characterized by** comprising:
a first interlock lever (30) coupled with a crank of a spindle (12) of one power supply switch (1) of the dual power supply switching device and configured to move in response to closing of said one power supply switch (1), wherein when said one power supply switch (1) is closed, the spindle (12) of said one power supply switch (1) rotates in a first direction;
a second interlock lever (40) pivotally connected with the first interlock lever (30) and also pivotally connected with a base of the dual power supply switching device, the second interlock lever (40) being configured to rotate in a second direction opposite to the first direction in response to the movement of the first interlock lever (30);
wherein a trip lever (24) of the other power supply switch (2) of the dual power supply switching device is configured to be in a rotation path of the second interlock lever (40) and is configured to be abutted by the second interlock lever (40) in the rotation path of the second interlock lever (40) so as to keep a tripped state of the other power supply switch (2).

2. The mechanical interlock (10) according to claim 1, being **characterized in that** the first interlock lever (30) is provided with a slide groove (32) so that the first interlock lever (30) is coupled with the spindle (12) of said one power supply switch (1) in a way of sliding relative to each other.

3. The mechanical interlock (10) according to claim 2, being **characterized in that** a biasing member (34) is disposed between a crank of the spindle (12) of said one power supply switch (1) and the first interlock lever (30), and is configured to bias the first interlock lever (30) in response to closing of said one power supply switch (1) so as to accelerate the movement of the second interlock lever (40).

4. The mechanical interlock (10) according to any of claims 1 to 3, being **characterized in that** the spindle (12) of said one power supply switch (1) is provided with a damping member for weakening kinetic energy of the spindle (12) of said one power supply switch (1) during closing.

5. The mechanical interlock (10) according to claim 4, being **characterized in that** the damping member is a spring, an end of which is disposed on the spindle (12) of said one power supply switch (1), another end of which is disposed on a housing of the dual power supply switching device, and the spring is configured to apply a resistant force to the spindle (12) of said one power supply switch at least at an early stage of the closing movement of said one power supply switch (1).

6. The mechanical interlock (10) according to any of claims 1 to 3, further comprising a blocking assembly (50) which moves in association with the closing movement of said one power supply switch (1) and which is configured such that when the other power supply switch (2) is normally closed, the blocking assembly (50) is located outside the closing path of the other power supply switch (2), and when said one power supply switch (1) and the other power supply switch (2) are closed simultaneously, at least one part of the blocking assembly (50) moves to the closing path of the other power supply switch (2) in association with the closing movement of said one power supply switch (1), and blocks the closing movement of the other power supply switch (2).

7. The mechanical interlock (10) according to claim 6, being **characterized in that** the blocking assembly (50) comprises a blocking link (52), an end of which is pivotally connected to the housing of the dual power supply switching device, another end of which is coupled with the second interlock lever (40) in a way of sliding relative to each other, the blocking link (52) being configured to rotate when driven by the second interlock lever (40) during the closing of said one power supply switch (1) so as to abut the crank of the spindle (22) of the other power supply switch (2).

8. The mechanical interlock (10) according to claim 7, being **characterized in that** the blocking link (52) comprises a protrusion (54) which protrudes towards the spindle (22) of the other power supply switch (2) from the blocking link (52).

9. Dual power supply switching device, **characterized by** comprising:
one power supply switch (1);
another power supply switch (2); and
mechanical interlocks (10) according to any of claims 1 to 8 arranged on both sides of the dual power supply switching device in a centrally symmetrical manner.

10. A method for a operating dual power supply switching device, being **characterized in that** the dual power supply switching device comprises one power supply switch (1), another power supply switch (2) and mechanical interlocks (10) arranged on both sides of the dual power supply switching device in a centrally symmetrical manner, and the method comprises:
in response to the closing of one power supply switch (1), rotating a spindle (12) of the one power supply switch (1) in a first direction so as to move a first interlock lever (30) of the mechanical interlock (10);
in response to the movement of the first interlock lever (30), rotating a second interlock lever (40) of the mechanical interlock (10) in a second direction opposite to the first direction; and configuring a trip lever (24) of the other power supply switch (2) of the dual power supply switching device in a rotation path of the second interlock lever (40), and in the rotation path of the second interlock lever (40), causing the trip lever (24) of the other power supply switch (2) to abut the second interlock lever (40) so as to keep the tripped state of the other power supply switch (2).

11. The method according to claim 10, further comprising causing the first interlock lever (30) and the spindle (12) of said one power supply switch (1) to slide relative to each other during the closing of said one power supply switch (1).

12. The method according to claim 11, further comprising applying a force to the first interlock lever (30) in response to the closing of said one power supply switch (1) so as to accelerate the movement of the second interlock lever (40).

13. The method according to any of claims 10 to 12, further comprising weakening kinetic energy of the spindle (12) of said one power supply switch (1) during the closing of said one power supply switch (1).

14. The method according to claim 13, further comprising applying a resistant force to the spindle (12) of said one power supply switch at least at an early stage of the closing movement of said one power supply switch (1).

15. The method according to any of claims 10 to 12, further comprising causing a blocking assembly (50) not to hinder the closing path of the other power supply switch (2) when the other power supply switch (2) is closed, and causing the blocking assembly (50) to move to the closing path of the other power supply switch (2) in association with the closing movement of said one power supply switch (1) and block the closing movement of the other power supply switch (2), when said one power supply switch (1) and the other power supply switch (2) are closed simultaneously.

16. The method according to claim 15, further comprising causing a blocking link (52) of the blocking assembly (50) to rotate when driven by the second interlock lever (40) so as to abut a crank of the spindle (22) of the other power supply switch (2), during the closing of said one power supply switch (1), and causing the blocking link (52) and the second interlock lever (40) to slide relative to each other when the second interlock lever (40) drives the blocking link (52) to move.

17. The method according to claim 7, further comprising using a protrusion (54), which protrudes towards the spindle (22) of the other power supply switch (2) from the blocking link (52), to abut the crank of the other power supply switch (2) during the closing of said one power supply switch (1).
